Europäisches Patentamt

European Patent Office

Office européen des brevets

(19)

(11) Veröffentlichungsnummer : **0 157 023**
**B1**

(12) **EUROPÄISCHE PATENTSCHRIFT**

(45) Veröffentlichungstag der Patentschrift :
06.07.88

(21) Anmeldenummer : 84201880.6

(22) Anmeldetag : 17.12.84

(51) Int. Cl.⁴ : **B 22 C   1/16**, B 22 C   1/18,
B 22 C   1/22, C 08 J   3/24

(54) **Bindemittel auf Basis Furfurylalkohol, Verfahren zu ihrer Herstellung und Verwendung.**

(30) Priorität : 31.03.84 DE 3412104

(43) Veröffentlichungstag der Anmeldung :
09.10.85 Patentblatt 85/41

(45) Bekanntmachung des Hinweises auf die Patenterteilung : 06.07.88 Patentblatt 88/27

(84) Benannte Vertragsstaaten :
BE DE FR GB IT

(56) Entgegenhaltungen :
DE-A- 2 239 835
US-A- 3 145 438
US-A- 4 108 826
US-A- 4 451 577

(73) Patentinhaber : RÜTGERSWERKE AKTIENGESELL-
SCHAFT
Mainzer Landstrasse 217
D-6000 Frankfurt am Main 1 (DE)

(72) Erfinder : Gardziella, Arno, Dr.
Rüdinghauser Berg 4
D-5810 Witten (DE)
Erfinder : Kwasniok, Alois, Dr.
Vom-Stein-Strasse 32
D-5860 Iserlohn 7 (DE)
Erfinder : Heerdegen, Harald
Zum Hohen Hof 28
D-5800 Hagen 8 (DE)
Erfinder : Janocha, Gerhard
Im Nordfeld 44
D-5860 Iserlohn 7 (DE)

## Beschreibung

Die Erfindung betrifft ein Bindemittel auf Basis Furfurylalkohol, das bei der Herstellung von Formkörpern, insbesondere zur Verwendung im Gießereisektor eingesetzt wird.

Aus DE-PS 2 239 835 ist ein Verfahren zur Herstellung derartiger Formkörper bekannt, bei dem die als Bindemittel eingesetzten säurehärtbaren Harze mit Schwefeldioxid begast und durch die in Gegenwart eines Oxidationsmittels und Wasser in situ auftretende Schwefelsäure gehärtet werden. Als derartige säurehärtbare Harze werden insbesondere für die Herstellung von Formen und Kernen für den Leichtmetallguß Furanharze eingesetzt, die sich durch hohe Thermoschockbeständigkeit, hohe Kaltbiegefestigkeit und guten Zerfall der Formkörper nach dem Guß auszeichnen.

Die Verwendung dieser Furanharze hat aber den Nachteil, daß sich bei der Herstellung der Formkörper im Formkasten sehr leicht ein Belag bildet und daß die Begasungsdüsen verkleben. Ersteres führt dazu, daß sich die Maße der Formkörper in unerwünschter Weise verändern, letzteres bedingt ein ungleichmäßiges Begasen und damit eine ungleichmäßige Härtung. Formkasten und Begasungsdüsen müssen daher sehr oft gesäubert werden. Dies bedeutet eine starke Beeinträchtigung der Arbeitsleistung bei der Formkörperherstellung.

Es bestand daher die Aufgabe, ein Bindemittel für die Herstellung von Formkörpern bereitzustellen, das zwar beim Leichtmetallguß die guten Eigenschaften herkömmlicher Furanharze hat, dessen Neigung zur Verklebung und Belagsbildung aber wesentlich reduziert ist.

Die Lösung dieser Aufgabe erfolgt durch Bindemittel gemäß Anspruch 1 sowie durch ein Verfahren zu ihrer Herstellung gemäß Anspruch 2 und ihre Verwendung gemäß Anspruch 3.

Die herkömmlichen Furanharze sind im wesentlichen höhermolekulare, sauer kondensierte Furfurylalkohol-Formaldehyd-Kondensationsprodukte, die im allgemeinen 15 bis 50 Gew.-% Furfurylalkohol enthalten. Höhermolekulare Furfurylalkohol-Formaldehyd-Kondensate sind solche, die mehr als vier Furankerne pro Molekül enthalten. Diese hochviskosen oder festen Produkte werden in Furfurylalkohol gelöst und mittels Furfurylalkohol wird auch die gewünschte Viskosität (100 bis 300 mPa·s) eingestellt. Der zugegebene Furfuralalkohol aber hat noch eine Funktion : Er bedingt die notwendige Reaktivität bei der Härtung. Die höhermolekularen Furfurylalkohol-Formaldehyd-Kondensationsprodukte sind sehr reaktionsträge. Um die bei der Formkörperherstellung geforderten Härtungsgeschwindigkeiten erzielen zu können, müssen die hochmolekularen Kondensate aktiviert werden. Daher wurde der hohe Anteil an Furfurylalkohol im Furanharz für notwendig erachtet.

Andererseits zeigte sich, daß die Belagbildung im Kernkasten und die Verklebung durch den Furfurylalkohol und daraus entstehende Kondensationsprodukte bedingt sind. Der aus dieser Erkenntnis folgende, naheliegende Schluß, auf die Verwendung von Furfurylalkohol zu verzichten und statt der reaktionsträgen, höhermolekularen Furanharze reaktive, niedermolekulare einzusetzen, führt nicht zum Erfolg, denn die niedermolekularen Furanharze, die zwei bis vier Kerne pro Molekül enthalten, härten nur bis zu einer bestimmten, nicht ausreichenden Festigkeit. So erhält man beim Einsatz eines durchschnittlichen niedermolekularen Furanharzgemisches bei der Härtung mit Schwefeldioxid zwar keinen Kastenbelag, aber nur Kaltbiegefestigkeiten des gehärteten Formkörpers von etwa 100 bis 150 N/cm². Benötigt werden aber aus gießereitechnischen Gründen Kaltbiegefestigkeiten von 300 bis 600 N/cm².

Es wurde nun gefunden, daß Bindemittelmischungen, die

40-60 Gew.-% höhermolekulare Furfurylalkohol-Formaldehydkondensationsprodukte

28-40 Gew.-% niedermolekulare Furfurylalkohol-Formaldehydkondensationsprodukte und

12-25 Gew.-% 2,5 Bis-hydroximethyl-furan enthalten, eine ausreichende Härtungsgeschwindigkeit besitzen, um einen wirtschaftlichen Herstellungsprozeß entsprechender Formkörper zu ermöglichen, daß sie die benötigten Druckfestigkeiten ergeben und daß die unerwünschte Belagbildung im Kasten und die Verklebung der Begasungsdüsen auch nach mehrfacher Formkörperherstellung nicht auftritt bzw. auf ein vertretbares Minimum reduziert wird. Diese erfindungsgemäßen Mischungen können sogar bis zu 8 Gew.-% Furfurylalkohol, bezogen auf die gesamte Bindemittelmischung, enthalten, ohne daß sich die Belagbildung und die Verklebung störend bemerkbar machen.

Die erfindungsgemäßen Bindemittel können durch Vermischen der Einzelkomponenten hergestellt werden. Bevorzugt werden sie jedoch direkt bei der Kondensation von Furfurylalkohol mit Formaldehyd erhalten, wobei ihre Zusammensetzung durch die Wahl der Reaktionsbedingungen bestimmt wird. Einsatzprodukte sind reiner oder technischer Furfurylalkohol und Formaldehyd oder eine Substanz, die unter den Reaktionsbedingungen Formaldehyd abzuspalten vermag. Produkte dieser Art sind z. B. Formaldehyd selbst, dessen handelsübliche 30 bis 50 %ige wäßrige Lösung (Formalin), Formaldehydbisulfit, Trioxymethylen oder Paraformaldehyd. Die Reaktanten werden in einem molaren Verhältnis von 1 : 0,6 bis 1 in schwach saurem Medium, vorzugsweise bei einem pH im Bereich von 2,5-6,0 miteinander umgesetzt. Die Einstellung des pH-Wertes erfolgt zweckmäßigerweise mit Essigsäure, die gegebenenfalls auch mit einer geringen Menge Lauge gepuffert sein kann. Die Umsetzung erfolgt bei Temperaturen zwischen 100 und 140 °C und dauert je nach Reaktionstemperatur 3 bis 12 h.

Sie wird durch Neutralisation des Reaktionsgemisches abgebrochen, wenn eine Viskosität des Reaktionsgemisches von 800 bis 900 mPa·s (bei 20 °C) erreicht ist.

Die erhaltene Mischung enthält sowohl die höhermolekularen als auch die niedermolekularen Kondensationsprodukte im gewünschten Verhältnis sowie 15 bis 20 Gew.-% 2,5-Bis-hydroximethyl-furan neben geringen Mengen nicht umgesetztem Furfurylalkohol und Wasser. Wasser und gegebenenfalls Furfurylalkohol und gegebenenfalls geringe Mengen an 2,5-Bis-hydroximethylfuran werden abdestilliert und es resultiert ein Harzgemisch, das bei 20 °C eine Viskosität von 8 000 bis 10 000 mPa·s hat. Dieses Bindemittel ist zur Herstellung von Kernen und Formen, die mit Schwefeldioxid gehärtet werden, geeignet, jedoch wird meist eine niedrigere Viskosität, etwa 300 mPa·s gewünscht, die eine leichtere Vermischung mit dem Formsand ermöglicht. Diese Viskosität wird durch Zugabe von etwa 10 Gew.-% eines niedrigen Alkohols, vorzugsweise von Äthanol eingestellt. Des weiteren werden, wie dies bei Furanharzen bei Kern- und Formsandbindemittel üblich ist, etwa 0,25 Gew.-% eines Silans zugegeben.

Beispiele

Beispiel 1

980 g techn. Furfurylalkohol und 300 g Paraformaldehyd 96-%ig werden nach Zugabe von 50 ml Eisessig und 1 ml 50 %iger Natronlauge unter Rühren zum Sieden erhitzt und 4 h bei dieser Temperatur gehalten.

Danach wird das Reaktionsgemisch mit Natronlauge neutralisiert und 140 ml Wasser und 203 g Furfurylalkohol abdestilliert. Erhalten werden 910 g Bindemittel, das mit 2,5 g Aminosilan und 90 g Methanol vermischt und damit auf eine Viskosität von 300 mPa·s eingestellt wird. 150 g dieser Lösung werden mit 60 g Methyläthylketonperoxid (50 %ig. in Phlegmatisierungsmittel) und 15 kg Quarzsand innig vermischt. Von der erhaltenen Masse werden nacheinander zwanzigmal jeweils 1 kg in einen mit einer Begasungsdüse versehenen Kernkasten eingefüllt, 1 sec lang mit einer SO₂-Strom begast und 20 sec lang mit Luft nachgespült. Die erhaltenen Formkörper haben nach 1 h eine Kaltbiegefestigkeit von 530 N/cm². Formkasten und Begasungsdüse zeigen nach Versuchsende weder einen nennenswerten Belag noch eine Verklebung. Temperaturschockbeständigkeit und Zerfall der Formkörper nach einem Guß entsprechen den Formkörpern, dit mit handelsüblichem Furanharz hergestellt sind.

Vergleichsbeispiel 1

Analog Beispiel 1, jedoch unter Verwendung eines handelsüblichen Furanharzes, dessen Viskosität mit Furfurylalkohol auf 300 mPa·s eingestellt ist, als Bindemittel. Bereits nach 10 Formenfüllungen und Begasungen ist in dem Kernkasten ein fester Belag von durchschnittlich 0,25 mm Dicke. Desgleichen ist die Düse zu etwa 20 % verklebt.

Vergleichsbeispiel 2

Analog Beispiel 1, jedoch unter Verwendung eines Furanharzes, das im Schnitt 2 bis 4 Furankerne pro Molekül enthält als Bindemittel. Nach der Härtung wird eine Kaltbiegefestigkeit von 145 N/cm² erhalten. Die Festigkeit kann auch durch eine thermische Nachbehandlung nicht erhöht werden.

Vergleichsbeispiel 3

Analog Beispiel 1, jedoch unter Verwendung von techn. 2,5-Bis-hydroximethylfuran als Bindemittel. Bei der Härtung wird lediglich eine Kaltbiegefestigkeit von 110 N/cm² erreicht.

Patentansprüche

1. Bindemittel auf Basis Furfurylalkohol zur Herstellung von Formkörpern aus einem körnigen Material, dadurch gekennzeichnet, daß es folgende Zusammensetzung hat :
40-60 Gew.-% höhermolekulare d. h. mehr als vier Furankerne pro Molekül enthaltende Furfurylalkohol-Formaldehyd-Kondensationsprodukte
28-40 Gew.-% niedermolekulare d. h. zwei bis vier Furankerne pro Molekül enthaltende Furfurylalkohol-Formaldehyd-Kondensationsprodukte
12-25 Gew.-% 2,5-Bis-hydroximethylfuran
0-8 Gew.% Furfurylalkohol.

2. Verfahren zur Herstellung der Bindemittel nach Anspruch 1, dadurch gekennzeichnet, daß Furfurylalkohol und Formaldehyd im molaren Verhältnis von 1 : 0,6-1 bei einem pH-Wert im Bereich von 2,5-6,0 miteinander umgesetzt werden, bis das Kondensationsprodukt eine Viskosität von 800-900 mPa·s hat und daß danach Wasser und nicht umgesetzter Furfurylalkohol abdestilliert werden.

3. Verwendung des Bindemittels nach Anspruch 1 zur Herstellung von Formen und Kernen, die mit Schwefeldioxid begast und durch die in situ gebildete Schwefelsäure gehärtet werden.

Claims

1. Binder based on furfurylalcohol for the manufacture of moulding elements from a grained material, characterised in that the binder has the following composition :
40-60 % by weight high-molecular, i. e. containing more than four furan nuclei per molecule, furfurylalcohol-formaldehyde condensate products
28-40 % by weight low-molecular, i. e. containing two to four furan nuclei per molecule, furfurylalcohol-formaldehyde condensate products
12-25 % by weight 2,5-bis-hydroxymethylfuran 0-8 % by weight furfurylalcohol.

2. Method of producing the binder according to claim 1, characterised in that furfurylalcohol and formaldehyde in a molecular ratio of 1 : 0.6-1 are converted with one another at a pH-value in the region of 2.5-6.0 until the condensation product has a viscosity of 800-900 mPa·s and in that water and unconverted furfurylalcohol are subsequently distilled off.

3. Use of the binder according to claim 1 for the manufacture of moulds and cores, which are gassed with sulphur dioxide and hardened by the sulphuric acid formed in situ.

**Revendications**

1. Liant à base d'alcool furfurylique pour la préparation de corps de moulage à partir d'une matière granuleuse, caractérisé en ce qu'il présente la composition suivante :

40-60 % en poids de produits de condensation alcool furfurylique formaldéhyde de poids moléculaire élevé, c'est-à-dire comportant plus de 4 noyaux de furanne par molécule, 28-40 % en poids de produits de condensation alcool furfurylique formaldéhyde de faible poids moléculaire, c'est-à-dire contenant 2 à 4 noyaux de furanne par molécule-formaldéhyde,

12-25 % en poids de 2,5-bis-hydroxyméthylfuranne,

0-8 % en poids d'alcool furfurylique.

2. Procédé pour la préparation des liants selon la revendication 1, caractérisé en ce que l'on fait réagir entre eux l'alcool furfurylique et le formaldéhyde dans un rapport molaire de 1 : 0,6-1 pour une valeur de pH dans le domaine de 2,5-6,0, jusqu'à ce que le produit de condensation présente une viscosité de 800-900 mPa et en ce qu'ensuite on chasse par distillation l'eau et l'alcool furfurylique n'ayant pas réagi.

3. Utilisation du liant selon la revendication 1, pour la préparation de moules et de noyaux, qui sont balagés à l'anhydride sulfureux et durcis par l'acide sulfurique formé in situ.